# EUROPEAN PATENT APPLICATION

(11) **EP 2 415 345 A2**
(43) Date of publication of application: **08.02.2012**
(21) Application number: 11006259.3
(22) Date of filing: 29.07.2011
(51) Int. Cl.: A01K 91/04, A01K 91/047

(54) **A fishing line coupler**

(30) Priority: 02.08.2010 GB 1012976
(71) Applicant: H. Young (Operations) Limited, Berkshire RG14 1BG (GB)
(72) Inventor: O'Hara, Padraic, Thomas, Newbury Berkshire, RG14 1Bd. (GB); Robinson, Michael, Derek, Newbury Berkshire, RG14 1Bd. (GB)
(74) Representative: Tart, Keith Raymond

(57) **Abstract**

A fishing line coupler (10) having: a sleeve (12) that presents a female recess, into which a male member (14) is fixed; an annular gap (G) between the sleeve and a front portion of the male member; a slot (S1) in that part of the male member over which the sleeve at least partly extends, said slot being defined by a wall that extends inwardly across the entire width of the male member in a direction towards the front thereof; wherein the sleeve has at least one side slot (S2) that aligns with at least part of said male member slot to form a closed aperture (A); and where in use the loop of a fishing line may be attached by drawing it at least part way along said annular gap in an axial direction towards the front end of the male member, such that said loop is held in place within said closed aperture.

## Description

The present invention concerns a fishing line coupler; and in particular (but not exclusively) a coupling device for detachably connecting a line to which a hook is attached to the main (leader) fishing line that is partly held on a fishing reel. The invention may also be used to attach a piece of fishing equipment, such as a float, to a main line.

Fishing line connectors that incorporate swivels are well known. They typically comprise two metal rings joined by a swivel mechanism. Connectors that have no swivel sometimes employ a jaw mechanism (for example Drosdak; US 4864767) to allow attachment/detachment of a hook line to a leader line. Yoshida (US 4117574) discloses a knotless fishing line connector that uses a spiral shaped groove. Push-fit plastic connectors such as that described by Blette et al. (US2005/0039376) are also known.

### Brief Description of Drawings

The following schematic drawings illustrate embodiments of the invention:
Figure 1 shows a perspective view of the underside of a coupler according to a preferred embodiment of the invention;
Figure 2 shows a perspective view of the topside of the coupler shown in Figure 1;
Figure 3 shows an exploded side view of the components of the coupler prior to assembly;
Figure 4 shows a plan view of the coupler of Figure 1;
Figure 5 shows an underside view of the coupler of Figure 1;
Figure 6 shows a side view of the coupler of Figure 1;
Figures 7 (A-D) show sequential perspective views of a fishing line with an end hoop being attached to the connector;
Figures 8 (A-D) show sequential perspective views of a fishing line with an end loop being detached from the connector;
Figure 9 shows a side elevation of a connector according to a second embodiment of the invention; and
Figure 10 shows an end elevation of the connector of Figure 9.

### Summary of the Invention

An object of the present invention is to provide an improved fishing line coupler and in particular a coupler that may be used to readily attach and detach a second fishing line to which a hook is attached to a leader line. Another object of the invention is to provide a coupler that may form part of an item (such as a float) to which a fishing line may be attached. A further object of the invention is to provide a coupler that avoids accidental detachment of such a hook line. Yet another object of the invention is to provide a coupler that is small; of simple construction; and that may readily be manufactured from plastics materials.

In one aspect the invention comprises a fishing line coupler having: a sleeve that presents a female recess into which the front end of a male member is fixed; an annular gap between at least part of the sleeve and a front portion of the male member; said male member being directly connected to a piece of fishing equipment (such as a float) or having conventional fixing means located proximal a rear end, to which a first line can be attached; and a slot in that part of the male member over which the sleeve at least partly extends, said slot being defined by a wall that extends inwardly across the entire width of the male member in a direction towards the front of thereof; wherein the sleeve has at least one side slot that aligns with at least part of said male member slot to form a closed aperture; and where in use the loop of a second line may be attached by drawing it at least part way along said annular gap in an axial direction towards the front end of the male member, part of the loop passing through a circumferential gap in part of said sleeve such that said loop is subsequently held in place within said closed aperture.

Preferably, the sleeve has a rear abutment face that is at least in part inclined at an acute angle to a longitudinal axis of the male member. This assists guidance of a looped fishing line during attachment.

Preferably, the rear face is predominantly inclined to said axis of the male member at an angle in the range 20-70°. Preferably, a first end of the abutment face is proximal the start of said male member slot. Preferably, a second end of the abutment face adjoins a side wall of said sleeve slot.

Preferably, the side wall of said sleeve slot forms a sharp edge with the second end of said rear abutment face. This reduces the possibility of accidental detachment of a second line from the coupler. Preferably, the circumferential gap in the sleeve is defined by a pair of faces that slope inwardly towards each other. The sloping faces assist threading. Preferably, the pair of faces also each have an outwardly sloping portion. This assists unthreading of the hook loop.

Preferably, the male member slot continues beyond said first portion to a second portion that also extends across the entire width of the male member, in the direction of said axis of male member, towards the front face of the male member. Preferably, the side wall of the slot extends in a direction at an angle in the range 20-70° to said axis of male member.

Preferably, the annular gap has a width of between 0.5 and 10 times the line thickness; more preferably, or 0.6 and 5 times the line thickness; and most preferably, 0.7 and 2 times the line thickness.

Normally, the front end of the male member is bonded or permanently fixed to the front surface of the sleeve.

Typically, the male member has circular cross section. Preferably, the slot in the male member initially extends in a direction that slopes at a constant acute angle to the axis of the male member and/or then extends at a progressively deceasing angle to said axis.

Preferably the coupler has a detachable cover that fits over said fixing means. Typically, the coupler cover is made from a flexible plastics material such as silicone rubber. Typically, the sleeve and/or male member is made from a rigid plastics material. Preferably, the cover has a sloping front face adapted to match profile of sleeve rear face and in use present small gap between the rear face and the front face to facilitate insertion of a line loop. Preferably, this small gap has a width of between 0.5 and 10 times the line thickness; more preferably, or 0.6 and 5 times the line thickness; and most preferably, 0.7 and 2 times the line thickness.

In another aspect the invention comprises a fishing line coupler having: at least one side member that is attached to and partially surrounds a front portion of a male member to present a gap between at least part of the side member and a front portion of the male member; said male member having conventional fixing means located proximal a rear end, to which a first line can be attached; and a slot in that part of the male member over which the sleeve at least partly extends, said slot being defined by a wall that extends inwardly across the entire width of the male member in a direction towards the front thereof; wherein the side member has a side slot that aligns with at least part of said male member slot to form a substantially closed aperture; and where in use the loop of a second line may be attached by drawing it at least part way along said slot and through said gap in an axial direction towards the front end of the male member, part of the loop passing over a portion of said side member that extends around and below the lower portion of said male member such that said loop is held in place within said closed aperture. Preferably, the coupler has a pair of side members each with said extending portion that define a second gap there between.

### Detailed Description of the Invention

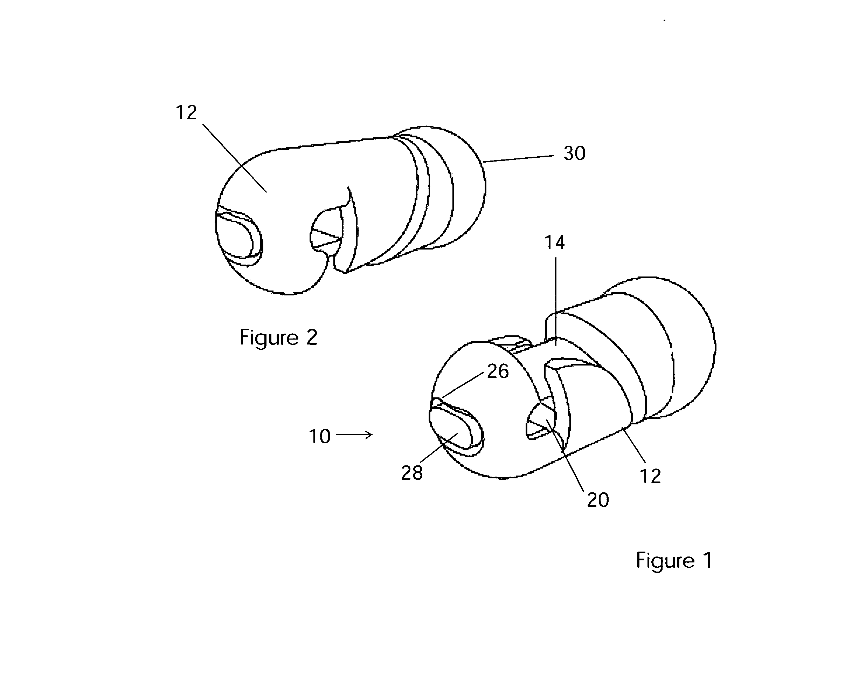

A preferred embodiment of the invention will now be described by reference to Figures 1-6.

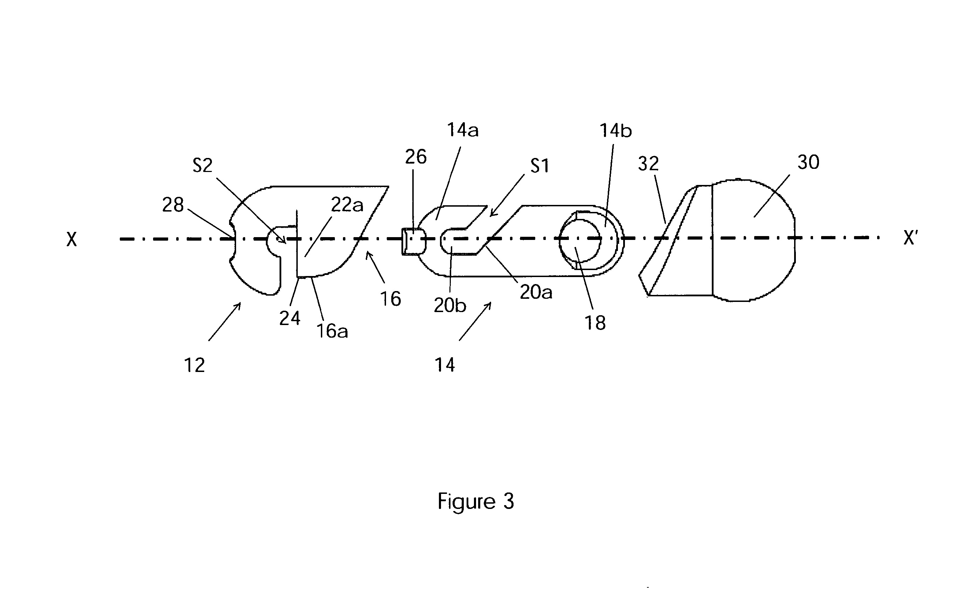

The coupler (10) comprises two main component parts (see Figure 3) namely: a sleeve (12) and a male member (14). The male member typically has a circular cross section and is elongate; having a longitudinal axis X-X'. The sleeve (12) surrounds the majority of the front end portion (14a) of the male member and this front end portion (14a) is permanently attached to the sleeve (12) so as to present an annular gap between the inner surface of the sleeve and the outer surface of the front end portion (14a) the gap (G1) being approximately equal to between 0.7 and 2 times the thickness of fishing line (typically nylon) for which the connector is designed. The sleeve (12) has a rear abutment face (16) a significant portion of which is typically inclined at an acute angle (α) to the axis X-X'. The inner end (16a) of this rear surface directly or indirectly adjoins a slot (22) to form a sharp edge (24). The slot (22) has a portion that extends in a direction approximately perpendicular to axis X-X' and preferably also a smaller portion that extends along axis X-X' towards the front end of the male member (14a). A second end (16a) of the abutment face adjoins a side wall (22a) of the sleeve slot (S2) so as to form a sharp edge. Preferably, the sleeve (12) is permanently fixed to the front end (14a) of the male member by means of an extension member (26) that is heat sealed within an aperture (28) provided in the front end of the sleeve (12); this sealing step being performed during manufacture of the coupler.

The male member (14) also has a slot (20) part of which (20a) extends along an axis that forms an acute angle (β) with axis X-X' and part of which (20b) typically extends along axis X-X' towards the front end (14a) of the male member. The rear end (24b) of the male member has an eye (18) through which fishing line (extending from a fishing reel) can be fixed by conventional means; for example using a knot. A rear cover (30) that can be fitted over the rear end of the male member and that also has a rear axial hole (not shown) is preferably provided to cover the line so attached; the line being threaded through said aperture in the rear cover. Typically, the rear cover comprises silicone rubber.

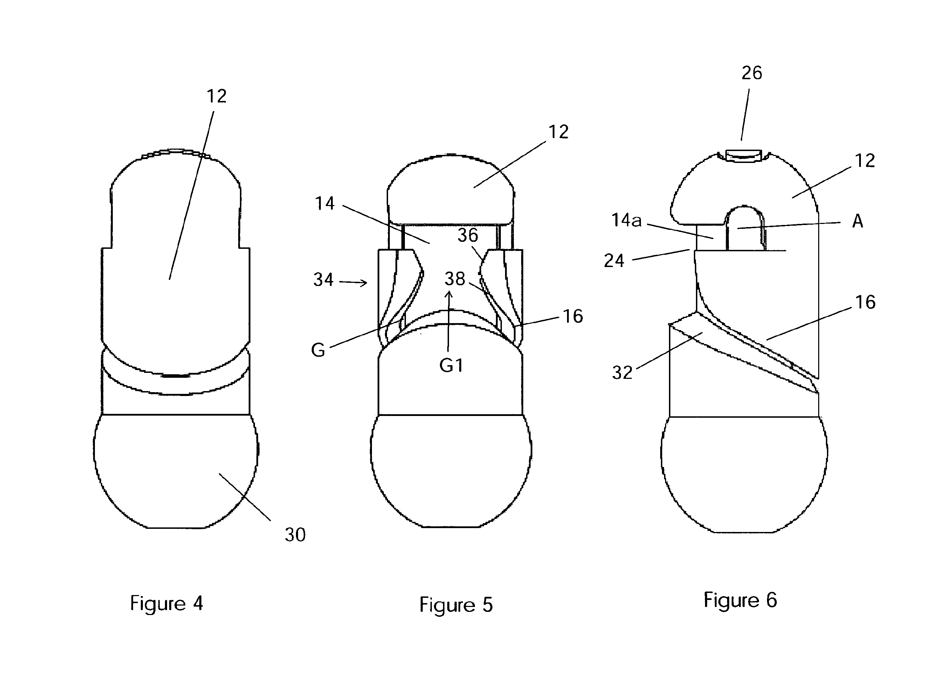

Additional features of the sleeve (12) and the male member (14) will now be described by reference to the elevations shown in Figures 4-6. In particular, Figure 5 shows an underside view of the coupler of Figure 1, and that the sleeve (12) surrounds only the front end (14a) of the male member; that part of the sleeve (12) that forms an annular gap (G) with the middle portion of the male member (14) does not fully surround this member; a pair of opposing faces (34) comprising first and second angled sides (36, 38) form a second gap (G1) which is provided in order to allow a looped line to be attached and detached from the coupler (see below).

The male member (12) and sleeve (14) typically comprise a plastics material; preferably a thermoplastic material such as polypropylene. Typically, the length of the connector is in the range 4-30 mm. Such small connectors can readily be manufactured. Small size is an advantage in that the connection joint is less visible to fish.

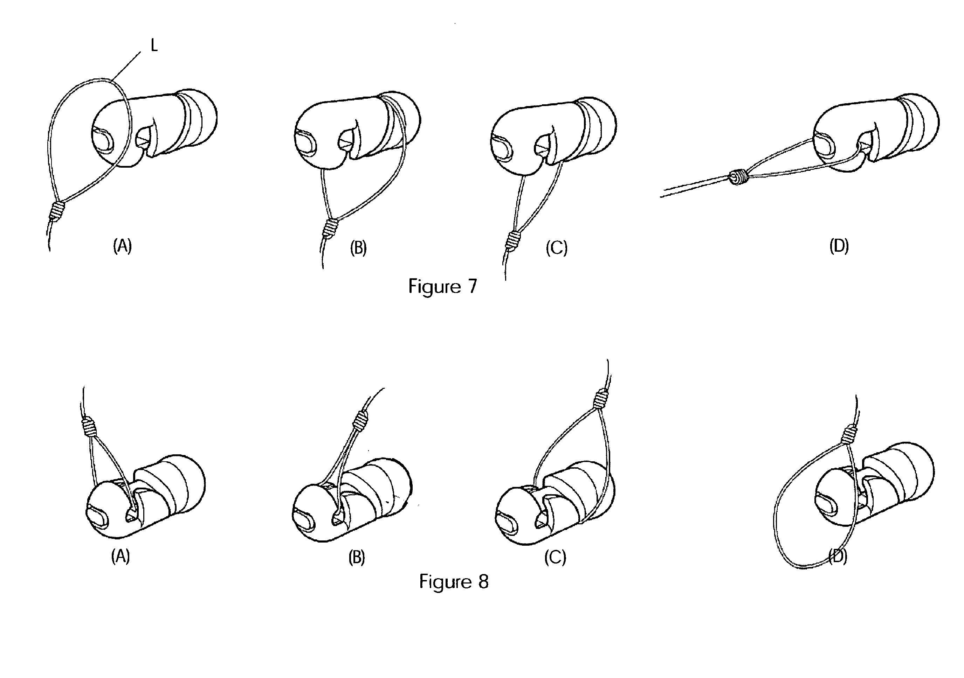

Figures 7 (A-D) show how a loop (L) of a fishing line (attached at the other end to a hook) is attached to the coupler. The coupler (10) is placed within the loop; the top portion of the loop being located in the small gap provided between rear abutment surface (16) and an inner face of the rear cover (30); the line (typically inclined at approximately an angle α to the axis X-X') is then drawn towards the front end of the coupler (10). By this action the loop is initially drawn down the sloping face of the male member slot (20a); in so doing part of the loop abuts rear abutment face (16) and is pulled through the second gap (G2) as it abuts the first and second sides (36, 38) of the opposing faces (34) of the sleeve (12). This results the loop being held within the aperture (A) formed by cooperation of the male slot (20) and the sleeve slot (22).

Figures 8 (A-D) illustrate how a loop (L) of a fishing line (attached at the other end to a hook) is detached to the coupler. The coupler is typically held underside uppermost (see Figure 8A); a user then crimps that part of the loop which is accessible (see Figure 8B) and draws it towards the rear of the coupler (10) through the second gap (G2); during which part of the loop abuts the first side (36) and then the second side (38) of the opposing faces (34) before being drawn along an abutment face (32) of the cover (30); part of the loop simultaneously being drawn up through male slot (20a), thus allowing detachment of the loop from the coupler.

The present invention thus provides means whereby a line (loop) can readily be attached and detached from the coupler. This allows a user to easily change hook size etc. during fishing. The loop can only be detached as explained above and thus cannot become accidentally detached in use.

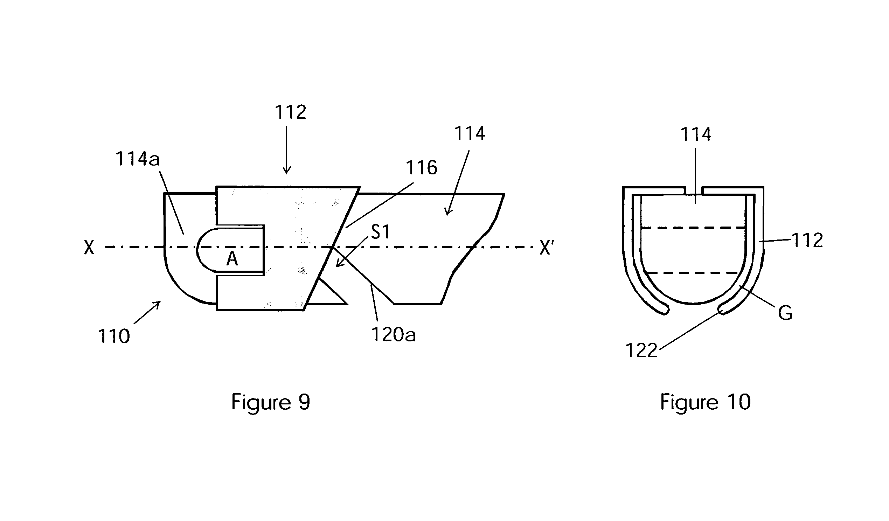

Figures 9 and 10 illustrate a further embodiment of the invention. The coupler (110) comprises two main component parts namely: a side member (112) and a male member (114). The male member is elongate; having a longitudinal axis X-X'. The side member (112) surrounds part of the front end portion (114a) of the male member and this front end portion (114a) is permanently attached to the side member (112) so as to present a gap (G) between the inner surface of the side member and the outer surface of the front end portion (114a) the gap (G) being approximately equal to the thickness of fishing line (typically nylon). The side member (112) has a rear abutment face (116) a significant portion of which is typically inclined at an acute angle (α) to the axis X-X'. The side member (112) has a rectangular slot that extends along axis X-X' towards the front end of the male member (114a). Typically, there are a pair of side members (112) permanently fixed to a upper front portion of the male member (114); for example heat sealed thereto; this sealing step being performed during manufacture of the coupler. The side member (112) rectangular slot aligns with at least part of the male member slot to form a closed aperture (A).

In use, the loop of a second line may be attached by drawing through the gap (G) in an axial direction towards the front end of the male member, part of the loop passing over a portion (122) of said side member (112) that extends around and below the lower portion of said male member (114) such that said loop is held in place within said closed aperture (A).

## Claims

1. A fishing line coupler (10,110) **characterized in that** it comprises: a sleeve (12) or side member (112) that is attached to and partially surrounds a front portion (14a,114a) of a male member (14,114) to present a gap (G) between at least part of the sleeve (12) or side member (112) and a front portion (14a,114a) of the male member; said male member (14,114) being directly connected to a piece of fishing equipment or having conventional fixing means (18) located proximal a rear end, to which a first line can be attached; and a slot (S1) **in that** part of the male member (14,114) over which the sleeve (12) or side member (112) at least partly extends, said slot being defined by a wall (20a,120a) that extends inwardly across the entire width of the male member (14,114) in a direction towards the front thereof; wherein the sleeve (12) or side member (112) has a side slot that aligns with at least part of said male member slot (S1 ) to form a substantially closed aperture (A); and where in use the loop of a second line may be attached by drawing it at least part way along said slot (S1) and through said gap (G) in an axial direction towards the front end of the male member, such that said loop is held in place within said closed aperture (A).

2. A coupler (10,110) according to Claim 1 where said sleeve (12) or side member (112) has a rear abutment face (16, 116) that is at least in part inclined at an acute angle to a longitudinal axis of the male member.

3. A coupler (10,110) according to Claim 2 where the rear face (16,116) is predominantly inclined to said axis of the male member (14,114) at an angle in the range 20-70°.

4. A coupler (10,110) according to Claim 2 or 3 where a first end of the abutment face is proximal the start of said male member slot (S1).

5. A coupler (10) according to any of Claims 2 to 4 where a second end (16a) of the abutment face adjoins a side wall (22a) of said sleeve slot (S2).

6. A coupler (10) according to Claim 5 where the side wall (22a) of said sleeve slot (S2) forms a sharp edge with the second end (16a) of said rear abutment face.

7. A coupler (10) according to any preceding claim wherein the circumferential gap (G) in the sleeve (12) is defined by a pair of faces (34) that slope inwardly towards each other (38).

8. A coupler (10,110) according to any preceding claim where the male member slot (S1) continues beyond said first portion (20a, 120a) to a second portion (20b) that also extends across the entire width of the male member (14,114), in the direction of said axis of male member (14,114), towards the front face (24) of the male member.

9. A coupler (10,110) according to any preceding claim where the side wall (20a,120a) of the slot (S1) extends in a direction at an angle in the range 20-70° to said axis of male member (14,114).

10. A coupler (10,110) according to any preceding claim where the slot (S1) in the male member initially extends in a direction that slopes at a fixed acute angle to the axis of the male member and/or then extends at a progressively deceasing angle to said axis.

11. A coupler (10,110) according to any preceding claim where in use the gap (G) has a width of between 0.5 and 10 times the second line thickness, or 0.6 and 5 times the second line thickness, or 0.7 and 2 times the second line thickness.

12. A coupler (10,110) according to any preceding claim further comprising a detachable cover (26) that fits over said conventional fixing means (18).

13. A coupler (10) according to Claim 12 where the cover (26) has a sloping front face (28) adapted to match profile of sleeve rear face (16) and in use present small gap between the rear face (16) and the front face (28) to facilitate insertion of a line loop.

14. A coupler (10) according to Claim 13 where in use the small gap is between 0.5 and 10 times the second line thickness, or 0.6 and 5 times the second line thickness, or 0.7 and 2 times the second line thickness.

15. A coupler (110) according to Claim 1 comprising a pair of side members (112) each with an extending portion (122) that define a second gap (G2) there-between.
